# EUROPEAN PATENT SPECIFICATION

(11) **EP 2 284 451 B1**
(45) Date of publication and mention of the grant of the patent: **22.01.2014**
(21) Application number: 09009010.1
(22) Date of filing: 10.07.2009
(51) Int. Cl.: F24J 2/16, F24J 2/54, G02B 7/183

(54) **Residential solar collector mirror for large area and low concentration collectors**
Heimsonnenkollektorspiegel für große Bereiche und Kollektoren mit niedriger Konzentration
Miroir de collecteur solaire résidentiel pour collecteurs de grande taille et à faible concentration

(43) Date of publication of application: 16.02.2011
(60) Divisional application: 13158762.8
(73) Proprietor: King Abdulaziz City for Science and Technology, Riyadh 11442 (SA)
(72) Inventor: Baabbad, Mazen A. Dr., 11442 Riyadh (SA)
(74) Representative: Goddar, Heinz J.

(56) References cited:
- DE-A1- 2 738 596
- DE-A1- 10 215 266
- US-A- 3 905 352
- US-A- 4 110 009
- US-A- 5 347 402
- US-A1- 2008 000 515

## Description

The invention relates to a mirror assembly which can be used as a large area solar collector and low concentration collector.

A system for collecting and transferring usable solar heat is known, for instance, from US 3,905,352. Therein, the system employs "sun-tracking" mirror apparatus moved through a predetermined orbit and comprising preferably a plurality of circumferentially spaced mirror units. Each mirror unit comprises preferably a multiplicity of individually adjustable mirrors arranged in banks which reflect in orbit solar rays advantageously to a concentrated heat-absorbing area of a novel vaporizer or boiler utilizing preferably mercury and mercury vapor as heat-absorbing, conducting and transferring medium. The multibank flat reflector units are mounted on a turntable or track to revolve in timed sequence with the sun travel and the novel vaporizer or boiler is axially mounted of the revolving apparatus and preferably is stationary with an insulating shutter arrangement revolving in orbit with the mirror reflector units and exposing through control, the concentrated heat-absorption area at the upper portion of the vaporizer. In orbit, tilting of the individual flat mirror reflectors of the multi-bank units is controlled in highly efficient manner by mechanical and/or electro-mechanical media responsive in the orbiting of the said banks of mirrors by now available and successive sun sensors. Preferably applicant employs one commercial sun sensor which is used to orient a 360 degree table to the sun in azimuth and a second sun sensor which is used to orient an elevation mechanism from -10 degree to +40 degree or more in elevation. The commercially available sensors include the necessary controls and drive mechanisms for individually adjusting the mirrors in orbit to effectively reflect sun rays to the critical vaporizer area.

US 5 347 402 A discloses a mirror assembly according to the preamble of claim 1.
A downside of this design and of similar designs known in the prior art can be seen in the high concentration of solar energy making the area surrounding the solar collector very hot, wherein air convection currents can spread the heat to the mirror area. It is another downside of those systems that the mirror assemblies disclosed in the prior art are vulnerable to sudden wind gusts even though individual mirror elements are mounted by means of an intricate system.

Another downside of known reflector mirror designs is that those designs may not be scaled up to areas beyond approximately 300 m² without suffering from serious structural and control problems. Yet another downside of prior art systems is that custom made parts are being used which may be difficult and costly to manufacture.

There is thus a need in the prior art for an improved mirror assembly being simple to manufacture, indifferent to environmental influences, such as wind or rain, and being highly scale-able.

The present invention therefore relates to a mirror assembly comprising a plurality of mirror elements; a plurality of vertically arranged support beams; a plurality of support rods being horizontally attached to the support beams so as to form an array of suspension compartments for said mirror elements; wherein each mirror element comprises suspension elements and an attachment string to arrange each of said mirror elements in a suspension compartment, characterized in comprising a base so as to make the mirror assembly rotatable, wherein at least two of said support beams are coupled to said base by means of a hinge and lever rods, wherein each lever rod is pivotably coupled to said base at its first end and slidably coupled to one of said support beams at its second end.

Preferably, each mirror element has said suspension elements arranged at a first end thereof to suspend said mirror element from a first support rod.

In addition, each mirror element may have said attachment string arranged at a second end thereof, wherein the second end is preferably arranged opposite to the first end, to attach said mirror element to a second support rod adjacent to the first support rod. Thus, each mirror element being flexibly attached to the horizontal support rods may individually swing in reaction to, for instance, a sudden wind gust, thereby avoiding a high structural load on the entire assembly. Another advantage of the present invention is that commonly available structural and mechanical parts may be used, resulting in a simple and cost-efficient manufacturing process.

All mirror elements are preferably plane.

Furthermore, each lever rod is preferably slidably and pivotably coupled to one of said support beams by means of a slider and a swivel joint attached to said slider and said second opposite end of said lever rod.
Each lever rod may be pivotably coupled to said base by means of a swivel joint attached to said first end of said lever rod and coupled to a power moving screw.

Furthermore, the power moving screws may be coupled to a shaft fitted with worm gears operable by motors so as to make the power moving screws collectively operable. Said worm gears are designed to lock motion coming from wind without passing it on to the motors. Said gears may be fitted with breaks, which may be used, e.g. at night, to damp system vibrations and provide prolonged gear life.

Further details of the present invention and advantages achieved thereby will become apparent from the following detailed description of preferred embodiments.
Figure 1a shows a mirror assembly according to a first embodiment of the present invention
Figure 1b shows at the right a mirror assembly according to the present invention and a second embodiment at the left on a roof which does not form part of this invention.
Figure 2 shows a perspective view of the mirror assembly according to the first embodiment.
Figure 3 shows a mirror element forming part of a mirror assembly according to the present invention.
Figure 4 shows another perspective view of a mirror assembly according to the first embodiment of the present invention.
Figure 5 shows a slider and joint in a vertical support beam forming part of mirror assembly according to the first embodiment of the present invention.
Figure 6 shows a vertically arranged support beam being hinged to a base.
Figure 7 shows a rotating base element.
Figure 8 shows a mirror assembly that does not form part of the present invention.
Figure 9 shows said mirror assembly of Figure 8 in further detail.
Figure 10 shows a cable mount arranged at a corner of the mirror assembly of Figure 8.
Figure 11 shows lower and intermediate pulleys of the mirror assembly of Figure 8.
Figure 12 shows upper pulleys of the mirror assembly of Figure 8.
Figure 13 shows several mirror assemblies according to Figure 8 being arranged side by side.

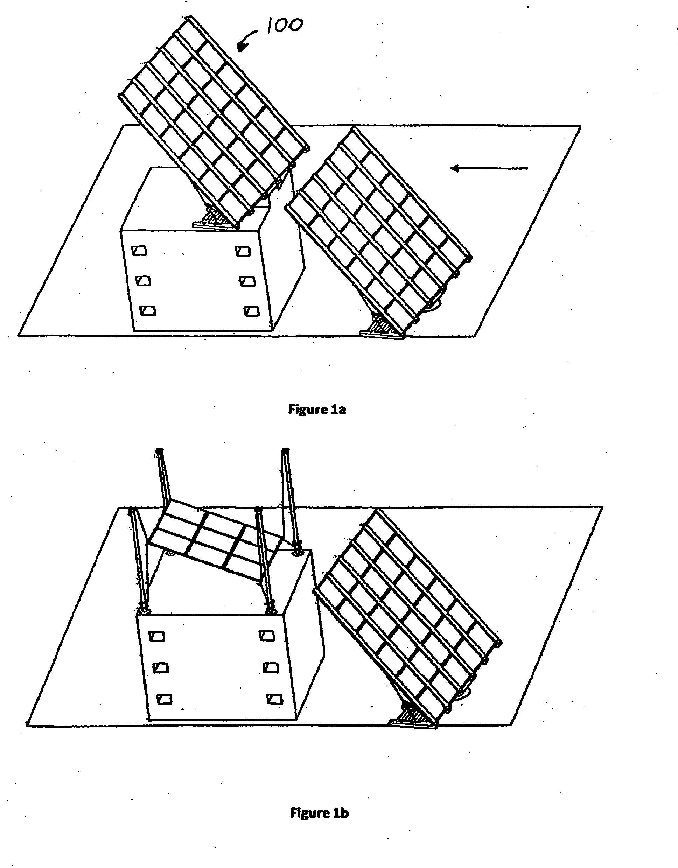

In figure 1a, two mirror assemblies according to the first embodiment of the present invention are shown, one of which being installed on the ground and the other one being installed on the roof of a building to provide shading for the south wall and the ceiling, respectively. In figure 1b, said second mirror assembly on the roof is exchanged with a mirror assembly according to a second embodiment which does not form part of this invention.

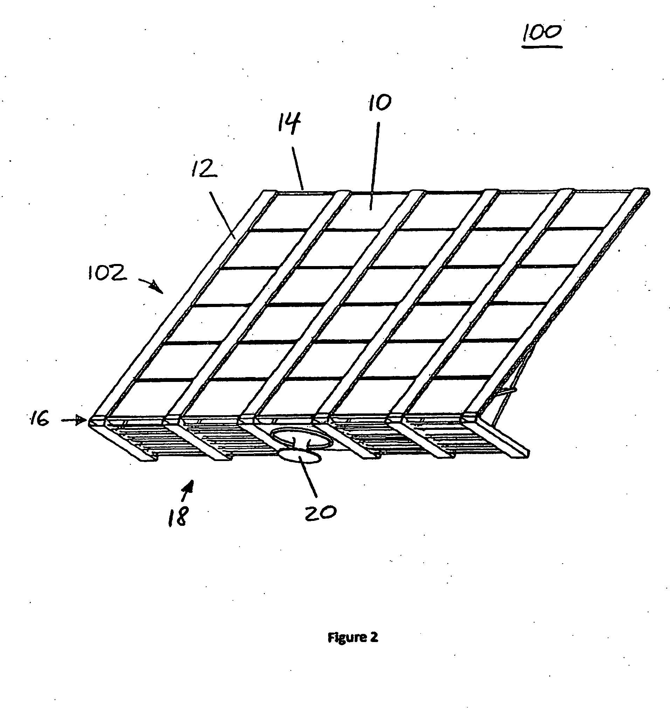

According to the first embodiment, the mirror assembly 100 as shown in figure 2 comprises an array of mirror elements 10. Vertically arranged support beams 12 and horizontally arranged support rods 14, which are attached to the support beams, form a structure 102 in the form of an array of suspension compartments for said mirror elements 10. The plurality of plane mirror elements 10 of the mirror assembly 100 thus form a large, substantially plane mirror area.

Said vertically arranged support beams 12 are coupled to a base 18 of the mirror assembly by means of a hinge 16. Said base 18 comprises a rotatable base element 20 around which the mirror assembly can be rotated around an axis at right angle to the ground on which the mirror assembly 100 is placed.

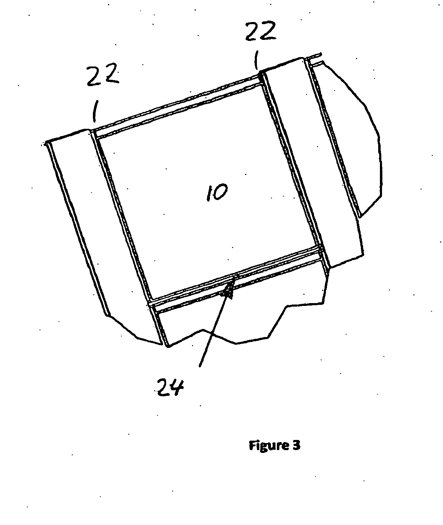

In figure 3 a close-up of a suspended mirror element 10 is shown. Said mirror element 10 is suspended from a first, upper support rod by means of two suspension elements 22 in the form of hooks or clamps. Said suspension elements 22 are arranged at a first, upper end of mirror element 10. The opposite, lower second end of mirror element 10 is attached to an adjacent, lower support rod by means of an attachment string 24. Said attachment string 24 is made of an elastic material so as to allow each mirror 10 to swing back and forth in case of strong winds, rain and similar environmental influences.

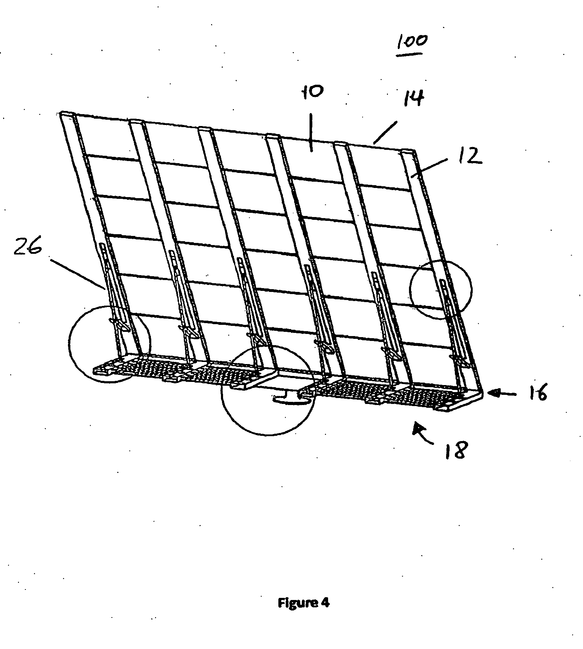

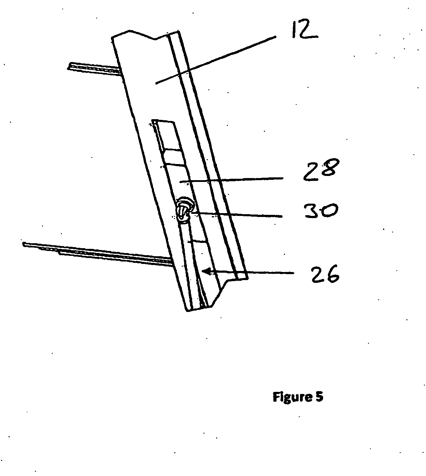

Figure 4 shows a backside view of mirror assembly 100 according to the first embodiment. As can be seen in figure 4, the upper structure 102 of the mirror assembly 100 defined by vertically arranged support beams 12 and horizontally arranged support rots 14 is held in position by means of lever rods 26. Each lever rod 26 is coupled to a support beam 12 by means of a slider 28 arranged within a guiding track formed in each support beam 12 and a swivel joint 30 attached to said slider 28 and to the upper end of said rod 26. This configuration is shown in figure 5.

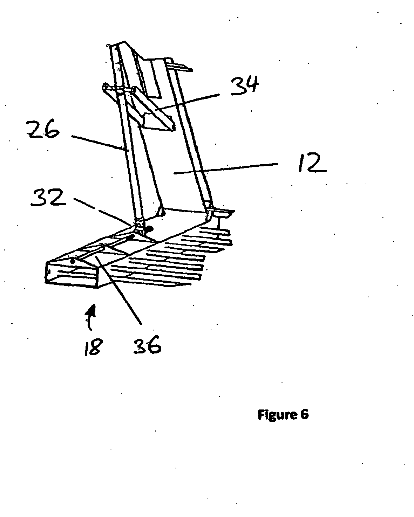

The lower end of each lever rod 26 is attached to base 18 by means of another swivel joint 32, as shown in figure 6. In addition, said lever rod 26 is held by an arm 34 to provide extra stability. Said swivel joint 32 attached to the lower end of each lever arm 26 is coupled to a power moving screw 36. The power moving screws 36 of the mirror assembly can be operated collectively by means of a shaft fitted with worm gears (not shown) operable by motor/s in order raise or lower the upper structure 102 formed by support beams 12 and support rods 14 around hinge 16. Worm gears are used in order to lock motion coming from, for instance, sudden wind gusts without transferring the motion to the moving motors.

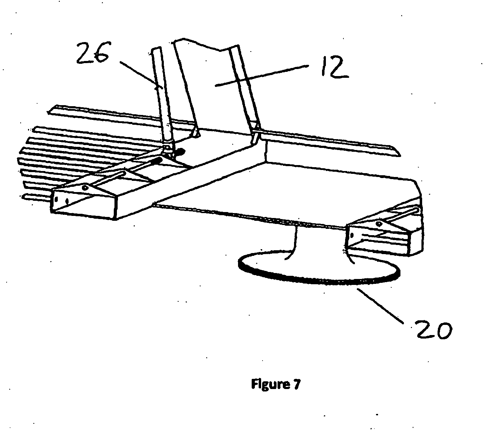

To allow the mirror assembly to turn around a virtual axis at right angle to the ground on which said mirror assembly is placed, said mirror assembly rests on the rotatable base element 20, as shown in figure 7.

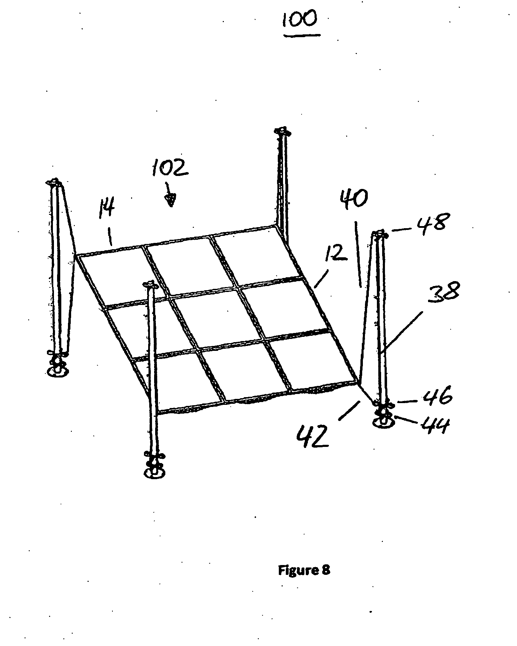

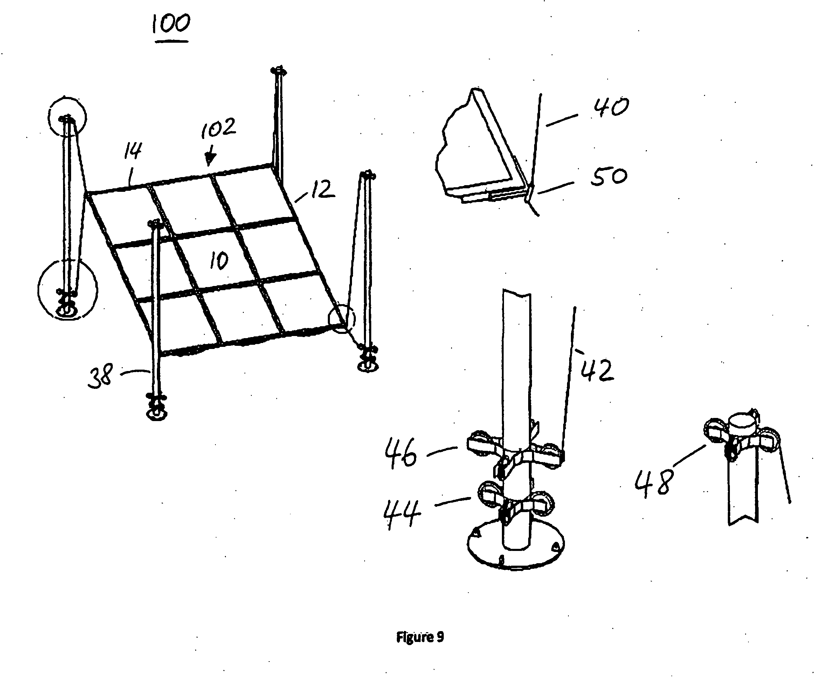

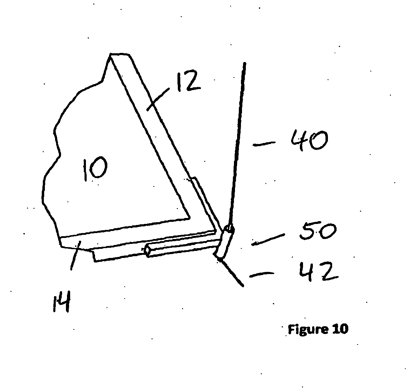

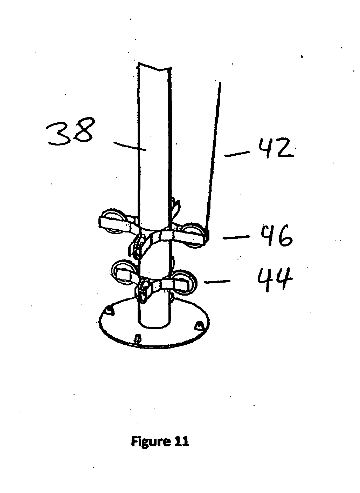

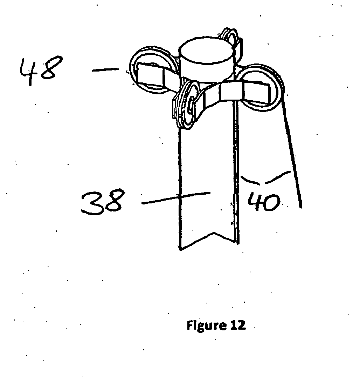

A basic configuration of a mirror assembly that does not belong to the present invention is shown in figure 8. An array of plane mirror elements 10 is flexibly arranged in between vertical support beams 12 and horizontal support rods 14, as described above by means of suspension elements 22 and attachment strings 24. Said structure 102 is, in turn, suspended from four poles 38, each being arranged at one corner of structure 102 of mirror assembly 100. Structure 102 formed by support beams 12 and support rods 14, is suspended from said poles 38 by means of cables 40, 42, wherein said cables 40, 42 are guided by lower, intermediate, and upper pulleys 44, 46, and 48. Details regarding those poles 38 and pulleys 44, 46, and 48 are shown in figures 9 to 12.

Each upper cable 40 is coupled and guided by a cable mount 50 mounted to a corner of structure 102. Said cable 40 leads up to the upper pulley 48 from where it runs parallel to the pole down to the lower pulley 44. At or near lower pulley 44 said cable 40 is coupled to a motor (not shown) in order to pull in or release said cable 40. Similarly, cable 42 is coupled to cable mount 50 from below and guided by intermediate pulley 46. Cable 42 is coupled to another motor (not shown) in order to pull in or release said second cable 42.

By adjusting the respective lengths of cables 40, 42 it is thus possible to define the height of each of the four corners of structure 102 of mirror assembly 100. Thereby, it is possible to flexibly arrange said plane array of mirror elements 10 with regard to two orthogonal axes.

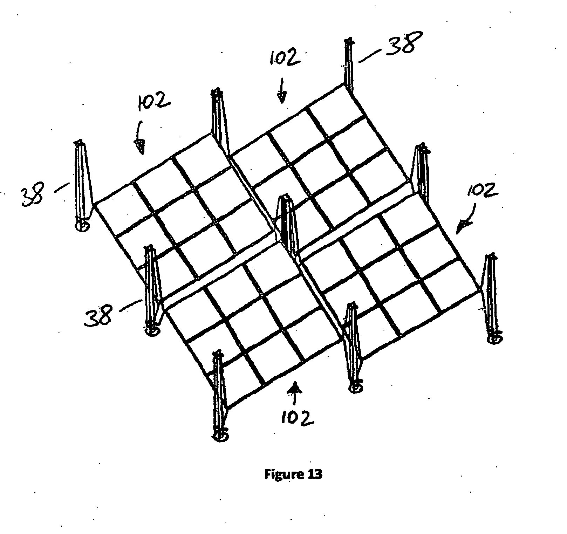

Figure 13 shows a possible arrangement, wherein four structures 102 are arranged and suspended from poles 38. It is thus possible to use the second embodiment to set up a freely configurable and scalable mirror surface.

The extent of protection shall be determined by the appended claims, wherein the description and drawings shall be used to interpret the claims.

## Claims

1. Mirror assembly comprising
a plurality of mirror elements (10);
a plurality of vertically arranged support beams (12);
a plurality of support rods (14) being horizontally attached to the support beams (12) so as to form an array of suspension compartments for said mirror elements;
wherein each mirror element (10) comprises suspension elements (22) and an attachment string (24) to arrange each of said mirror elements (10) in a suspension compartment, **characterized in** comprising a base (18) so as to make the mirror assembly rotatable, wherein at least two of said support beams (12) are coupled to said base (18) by means of a hinge (16) and lever rods (26), wherein each lever rod (26) is pivotably coupled to said base (18) at its first end and slidably coupled to one of said support beams (12) at its second end.

2. Mirror assembly according to claim 1, wherein each mirror element has said suspension elements (22) arranged at a first end thereof to suspend said mirror element (10) from a first support rod (14).

3. Mirror assembly according to claim 1 or 2, wherein each mirror element (10) has said attachment string (24) arranged at a second end thereof to attach said mirror element (10) to a second support rod (14) adjacent to the first support rod (14).

4. Mirror assembly according to one of the preceding claims, wherein all mirror elements (10) are plane.

5. Mirror assembly according to one of the preceding claims, wherein each lever rod (26) is slidably and pivotably coupled to one of said support beams (12) by means of a slider (28) and a swivel joint (30) attached to said slider and said second end of said lever rod (26).

6. Mirror assembly according to one of the preceding claims, wherein each lever rod (26) is pivotably coupled to said base (18) by means of a swivel joint (32) attached to said first end of said lever rod (26), wherein said swivel joint (32) is coupled to a power moving screw (36).

7. Mirror assembly according to claim 6, wherein the power moving screws (36) are coupled to a shaft fitted with worm gears so as to make the power moving screws (36) collectively operable.

## Patentansprüche

1. Spiegelanordnung, umfassend
eine Vielzahl von Spiegelelementen (10);
eine Vielzahl von vertikal angeordneten Trägern (12);
eine Vielzahl von Haltestangen (14), die an den Trägern (12) horizontal angebracht sind, um ein Feld von Aufhängefeldern für die Spiegelelemente zu bilden;
wobei jedes Spiegelelement (10) Aufhängeelemente (22) und eine Befestigungsschnur (24) zum Anordnen von jedem der Spiegelelement (10) in einem Aufhängefeld aufweist, **dadurch gekennzeichnet, dass** sie eine Basis (18), um die Spiegelanordnung drehbar zu machen, aufweist, wobei mindestens zwei der Träger (12) mit der Basis (18) mittels eines Scharniers (16) und Hebelstange (26) gekoppelt ist, wobei jede Hebelstange (26) mit der Basis (18) an ihrem ersten Ende schwenkbar gekoppelt und an ihrem zweiten Ende mit einem der Träger (12) gleitfähig gekoppelt ist.

2. Spiegelanordnung nach Anspruch 1, wobei besagte Aufhängeelemente (22) jedes Spiegelelements an einem ersten Ende desselben angeordnet sind, um das Spiegelelement (10) an einer ersten Haltestange (14) aufzuhängen.

3. Spiegelanordnung nach Anspruch 1 oder 2, wobei besagte Befestigungsschnur (24) jedes Spiegelelement (10) an einem zweiten Ende desselben angeordnet ist, um das Spiegelelement (10) an einer zweiten Haltestange (14) benachbart zur ersten Haltestange (14) zu befestigen.

4. Spiegelanordnung nach einem der vorangehenden Ansprüche, wobei alle Spiegelelement (10) eben sind.

5. Spiegelanordnung nach einem der vorangehenden Ansprüche, wobei jede Hebelstange (26) mit einem besagter Träger (12) mittels eines Gleitstücks (28) und eines an besagtem Gleitstück und besagtem zweiten Ende von besagter Hebelstange (26) angebrachten Drehgelenks (30) gleitfähig und schwenkbar gekoppelt ist.

6. Spiegelanordnung nach einem der vorangehenden Ansprüche, wobei jede Hebelstange (26) mit besagter Basis (18) mittels eines an besagtem ersten Ende von besagter Hebelstange (26) angebrachten Drehgelenks (32) schwenkbar gekoppelt ist, wobei besagtes Drehgelenks (32) mit einer Antriebsspindel (36) gekoppelt ist.

7. Spiegelanordnung nach Anspruch 6, wobei die Antriebsschnecken (36) mit einer mit Schneckenrädern ausgestatteten Welle gekoppelt sind, um die Antriebsschnecken (36) gemeinsam zu betreiben.

## Revendications

1. Ensemble de miroir comprenant :
une pluralité d'éléments de miroir (10) ;
une pluralité de barres de support agencées verticalement (12) ;
une pluralité de tiges de support (14) qui sont fixées horizontalement aux barres de support (12) de manière à former un réseau de compartiments de suspension pour lesdits éléments de miroir ;
dans lequel chaque élément de miroir (10) comprend des élément de suspension (22) et un cordon de fixation (24) pour agencer chacun desdits éléments de miroir (10) dans un compartiment de suspension, **caractérisé en ce qu'**il comprend une base (18) rendant l'ensemble de miroir rotatif, où au moins deux barres desdites barres de support (12) sont couplées à ladite base (18) au moyen d'une charnière (16) et de tiges de levier (26), ou chaque tige de levier (26) est couplée en pivotement à ladite base (18) au niveau de sa première extrémité et couplée en coulissement à l'une desdites barres de support (12) au niveau de sa deuxième extrémité.

2. Ensemble de miroir selon la revendication 1, dans lequel chaque élément de miroir a lesdits éléments de suspension (22) agencés au niveau d'une première extrémité de celui-ci pour suspendre ledit élément de miroir (10) à partir d'une première tige de support (14).

3. Ensemble de miroir selon la revendication 1 ou 2, dans lequel chaque élément de miroir (10) a ledit cordon de fixation (24) agencé au niveau d'une deuxième extrémité de celui-ci pour fixer ledit élément de miroir (10) à une deuxième tige de support (14) adjacente à la première tige de support (14).

4. Ensemble de miroir selon l'une des revendications précédentes, dans lequel tous les éléments de miroir (10) sont plats.

5. Ensemble de miroir selon l'une des revendications précédentes, dans lequel chaque tige de levier (26) est couplée en coulissement et en pivotement à l'une desdites barres de support (12) au moyen d'un coulisseau (28) et d'un joint articulé (30) fixé audit coulisseau et à ladite deuxième extrémité de ladite tige de levier (26).

6. Ensemble de miroir selon l'une des revendications précédentes, dans lequel chaque tige de levier (26) est couplés en pivotement à ladite base (18) au moyen d'un joint articulé (32) fixé à ladite première extrémité de ladite tige de levier (26), où ledit joint articulé (32) est couplé à une vis mobile de transmission (36).

7. Ensemble de miroir selon la revendication 6, dans lequel les vis mobiles de transmission (36) sont couplées à un arbre muni de vis sans fin de manière à ce que les vis mobiles de transmission (36) puissent fonctionner collectivement.
